# FASCICULE DE BREVET EUROPEEN

(11) **EP 1 736 334 B1**
(45) Date de publication et mention de la délivrance du brevet: **31.03.2010**
(21) Numéro de dépôt: 06010217.5
(22) Date de dépôt: 18.05.2006
(51) Int. Cl.: B60H 3/00

(54) **Dispositif de traitement antimicrobien par diffusion d' un agent traitant volatil pour une installation de ventilation, de chauffage et/ou de climatisation, d' un véhicule notamment**
Vorrichtung zur antimikrobielen Behandlung durch Diffusion eines flüchtigen Behandlungsmittels insbesondere für eine Lüftungs-, Heizung- oder Klimaanlage eines Fahrzeuges
Apparatus for the antimicrobial treatment by diffusion of a volatile treating agent in particular for a ventilation, heating or air-conditioning system of a vehicle

(30) Priorité: 22.06.2005 FR 0506352
(43) Date de publication de la demande: 27.12.2006
(73) Titulaire: Valeo Systèmes Thermiques, 78321 Le Mesnil St Denis Cedex (FR)
(72) Inventeur: Cornu, Laurence, 78730 Saint Arnoult en Yvelines (FR); Elliot, Gilles, 91080 Courcouronnes (FR); Ladrech, Frédéric, 78310 Maurepas (FR)
(74) Mandataire: Léveillé, Christophe

(56) Documents cités:
- EP-A- 1 671 658
- WO-A-2005/009493
- DE-U-202004 010 015
- US-A- 4 959 087
- US-A- 5 258 051
- US-A- 6 029 901
- US-A1- 2003 186 643

## Description

### Domaine technique de l'invention.

L'invention est du domaine des installations de ventilation, de chauffage et/ou de climatisation, pour habitacle de véhicule notamment. Elle a pour objet un dispositif de traitement de l'air à l'encontre d'un développement de microorganismes à l'intérieur d'une telle installation, par diffusion d'un agent volatil traitant.

US 2003/0186643 divulgue un dispositif selon le préambule de la première revendication.

### Etat de la technique.

Un problème général posé dans le domaine des installations de ventilation, de chauffage et/ou de climatisation pour habitacle de véhicule notamment, réside dans le traitement de telles installations à l'encontre du développement de microorganismes susceptibles de générer des mauvaises odeurs et/ou d'être une source d'inconfort pour les passagers du véhicule. De telles odeurs sont notamment provoquées par les phénomènes d'adsorption et de désorption de polluants gazeux, et par le développement susvisé des microorganismes.

Pour éviter un développement des microorganismes, il est connu d'appliquer un traitement spécifique pour le filtre que comporte l'installation, préalablement à la mise en place de celui-ci. Pour ce qui est des odeurs, il est connu d'utiliser des désodorisants ou des bombes antiseptiques. Il ressort à l'usage que ces traitements de l'installation ne sont pas satisfaisants quant à leur pérennité, avec pour conséquence un renouvellement fréquent de leur application. En outre, leur efficacité est douteuse et aléatoire pour les zones colonisées par les microorganismes. De plus, les traitements couramment appliqués n'étant pas préventifs, leur fréquence d'application en est d'autant rendue indispensable.

Une solution consiste à mettre à place à l'intérieur de l'installation un dispositif de traitement antimicrobien. Se pose cependant le problème d'une telle mise en place.

Plus particulièrement, une telle mise en place ne doit pas être faite au détriment de l'encombrement de l'installation, souhaité le plus restreint possible, ni être source d'un surcoût conséquent. En outre, il est souhaitable que cette mise en place ne soit pas réalisée à l'encontre d'une faculté offerte de standardisation de l'installation, tout en prenant en compte une modularité quant au choix de la mise en oeuvre ou non du dispositif de traitement antimicrobien, dès l'intégration de l'installation lors de la conception même du véhicule, et/ou lors d'une première monte du véhicule, et/ou encore lors d'une opération ultérieure d'entretien de celui-ci.

### Objet de l'invention.

Le but de la présente invention est de proposer un dispositif de traitement antimicrobien par diffusion d'un agent traitant volatil pour une installation de ventilation, de chauffage et/ou de climatisation, d'un véhicule notamment. Il est plus particulièrement visé par la présente invention de proposer un tel dispositif qui induise un accroissement limité de l'encombrement de l'installation, et qui permette une standardisation de cette installation tout en offrant la faculté de mettre en place ou non le dispositif selon le choix du constructeur, et/ou lors d'une première monte du véhicule, et/ou encore lors d'une opération d'entretien ultérieure de celui-ci et/ou de l'installation.

La présente invention a pour objet un dispositif de traitement antimicrobien par diffusion d'un agent traitant volatil pour une installation de ventilation, de chauffage et/ou de climatisation, d'un véhicule notamment. Une telle installation comprend un filtre à air à habitacle constitué d'une ossature porteuse d'un média filtrant. Un tel filtre à air est par exemple un filtre à particules, un filtre combiné, un filtre à charbon actif, un filtre photocatalytique, un filtre plasmatique, un filtre électrostatique ou tout autre filtre analogue.

Selon la présente invention, un tel dispositif est principalement reconnaissable en ce que le filtre comporte au moins un moyen d'intégration d'un substrat porteur de l'agent traitant. Le substrat est par exemple une mèche ou analogue imprégnée de l'agent traitant, ou encore un sachet contenant un gel ou analogue. D'une manière générale, le substrat est susceptible d'être constitué de tout organe porteur de l'agent traitant, ce dernier étant un agent volatil diffusant à travers ledit organe pour l'application du traitement. Par ailleurs, le filtre est susceptible d'être équipé d'un ou plusieurs moyens d'intégration d'un dit substrat.

Selon une variante de réalisation du dit moyen d'intégration, celui-ci est avantageusement constitué d'un logement de réception du substrat ménagé dans l'ossature du filtre.

Le logement est notamment ménagé sur l'ossature du filtre en s'étendant suivant l'une quelconque au moins des dimensions de ce dernier. Plus particulièrement, le logement est susceptible de s'étendre parallèlement et/ou perpendiculairement et/ou transversalement à l'extension des plis que comporte le média filtrant.

L'ossature est notamment conformée en cadre. Un tel cadre est par exemple composé de longerons et/ou de traverses supportant le média filtrant. A titre d'exemple de réalisation, le cadre est formé d'au moins une paroi surmoulée (injection des bords du cadre à l'état liquide autour du média filtrant), collée (fixation du média filtrant sur les bords d'un cadre préalablement moulé au moyen d'un adhésif) ou soudée (assemblage du cadre et du média filtrant à l'état de pièces finies). Avantageusement, ces parois s'étendent sur la périphérie du média. Le logement est préférentiellement ménagé à l'intérieur de l'un des bords du cadre. Selon une autre forme de réalisation, le logement est susceptible d'être ménagé entre deux bords opposés du cadre, tel que dans une zone médiane de ce dernier.

L'ossature étant munie d'une trappe de fermeture d'un passage d'introduction du filtre à l'intérieur de l'installation, le logement est par exemple ménagé dans ladite trappe.

Selon une autre variante de réalisation du dit moyen d'intégration, celui-ci est constitué par un conteneur solidarisé à l'ossature de manière à former avec le filtre une pièce unitaire, tel que par soudage, par collage ou par rivetage. Ce conteneur comporte un logement de réception du substrat. L'ossature étant conformée en cadre, le conteneur est de préférence rapporté latéralement à un bord du cadre, celui-ci étant éventuellement muni d'une goulotte de réception du conteneur.

Le conteneur est aussi susceptible d'être rapporté sur l'ossature par surmoulage. Notamment lors d'une opération de moulage du filtre, une étape consiste spécifiquement à rapporter de la matière par moulage sur l'ossature du filtre pour former le conteneur. Selon une autre forme d'obtention du conteneur, celui-ci est ménagé sur le filtre lors d'une même opération de moulage. Plus particulièrement, le conteneur est conjointement ménagé par moulage avec l'ossature du filtre.

Selon une forme particulière de réalisation du conteneur, celui-ci comporte au moins deux zones en prolongement axial, l'une dans laquelle est ménagé le logement et l'autre formant un corps d'extension du conteneur le long de la totalité de la paroi correspondante de l'ossature, pour éviter la formation d'une zone de non filtration du flux d'air.

Ledit logement, ménagé dans l'ossature du filtre , est obturé par un bouchon muni de moyens de liaison avec le filtre. Un tel bouchon est susceptible d'être standard pour un quelconque filtre. Selon diverses formes de réalisation, les moyens de liaison du bouchon avec le filtre sont des moyens de liaison réversible ou des moyens de liaison irréversible. Plus particulièrement, la liaison entre le bouchon et le filtre peut être réalisée de manière réversible, tel que par vissage, au moyen d'organes de fixations, tels que des vis ou des clips, par emboîtement souple, ou encore de manière irréversible par soudage, par collage ou par emboîtement en force.

De préférence et selon les modalités de liaison du bouchon au filtre, le bouchon est susceptible d'être attaché au filtre par un organe de retenue, par exemple au moyen d'une charnière flexible, d'un lien ou organe de retenue analogue.

Selon une autre forme de réalisation, le bouchon est solidaire d'une cartouche intermédiaire logeant le substrat.

Le bouchon est accessoirement muni d'un percuteur de perforation d'un opercule d'obturation du logement. Le substrat est par exemple logé à l'intérieur d'un conteneur qui est avantageusement muni dudit opercule. Selon d'autres variantes, cet opercule est ménagé en bout du substrat, ou encore est ménagé à l'intérieur du logement que comporte le filtre pour la réception du substrat. Le cas échéant où le substrat est logé dans la cartouche intermédiaire ou un contenant analogue, ledit opercule est susceptible d'être ménagé au débouché de cette cartouche ou contenant.

De préférence dans le cas d'un agencement du bouchon en percuteur, les moyens de liaison du bouchon avec l'ossature sont des moyens de liaison à deux positions entre lesquelles le bouchon est monté mobile sur l'ossature, l'une d'attente dans laquelle le percuteur est éloigné de l'opercule, l'autre d'activation dans laquelle le percuteur perfore l'opercule pour libérer l'émission de l'agent volatil traitant.

Grâce aux dispositions de la présente invention, l'installation est équipée d'un dispositif de traitement de l'air par agent volatil, sans que l'encombrement de cette installation ne soit considérablement accru, avec une réduction limitée de la surface de filtration. Notamment, le logement et/ou le conteneur sont susceptibles d'être ménagés dans le volume d'un filtre d'encombrement standard, sans pour autant réduire de manière significative la surface de filtration. Le cas échéant, dans le cas où l'apport du logement et/ou du conteneur sur l'ossature du filtre induit un accroissement du volume standard du filtre, un dégagement de réception du volume de cet accroissement est susceptible d'être ménagé dans la paroi de l'installation, pour éviter une réduction de la surface filtrante du filtre, aussi faible soit-elle.

La présente invention a aussi pour objet une installation de ventilation, de chauffage et/ou de climatisation équipé d'un dispositif de traitement de l'air qu'elle véhicule à partir d'un agent traitant volatil. Une telle installation comporte notamment au moins un filtre qui incorpore des moyens d'intégration d'un substrat porteur de l'agent traitant.

Le filtre est indifféremment placé en amont et/ou en aval d'un évaporateur que comporte l'installation.

Selon une première variante d'une telle installation, le filtre est logé à l'intérieur d'un boîtier logeant en outre des organes fonctionnels de l'installation, tel qu'un évaporateur et un pulseur générateur du flux d'air. Selon une autre variante d'une telle installation, le filtre est logé dans un boîtier qui lui est affecté, et est placé sous l'auvent du véhicule pour être accessible depuis le compartiment moteur. Un tel auvent est notamment formé d'un réceptacle ménagé en zone haute du tablier séparant l'habitacle du compartiment moteur, au pied du pare brise.

### Description des figures.

La présente invention sera mieux comprise à la lecture de la description qui va en être faite de formes préférées de réalisation, en relation avec les figures des planches annexées, dans lesquelles :
Les fig.1 et fig.2 sont des exemples respectifs de réalisation d'un dispositif de la présente invention, selon un mode d'exécution dans lequel un logement est ménagé en bordure de l'ossature d'un filtre pour recevoir un substrat imprégné d'un agent traitant.
La fig.3 est un schéma illustrant diverses variantes d'orientation d'un logement du type représenté sur les fig.1 et fig.2.
La fig.4 est un schéma illustrant diverses variantes de modalités d'introduction d'un substrat à l'intérieur d'un logement du type représenté sur les fig.1 et fig.2.
Les fig.5 et fig.6 sont d'autres exemples respectifs de réalisation d'un dispositif de la présente invention.
Les fig.7 à fig.12 sont des illustrations de différentes formes respectives de réalisation d'un bouchon de fermeture d'un logement du type représenté sur les fig.1 et fig.2
Les fig.13 et fig.14 sont des schémas illustrant successivement un autre exemple de réalisation d'un dispositif de la présente invention.
La fig.15 est un schéma illustrant un exemple d'organisation d'un conteneur constitutif d'un dispositif de la présente invention.
La fig.16 est un schéma en coupe longitudinale d'un conteneur représenté sur la fig.15.
La fig.17 est un détail de la fig.16.

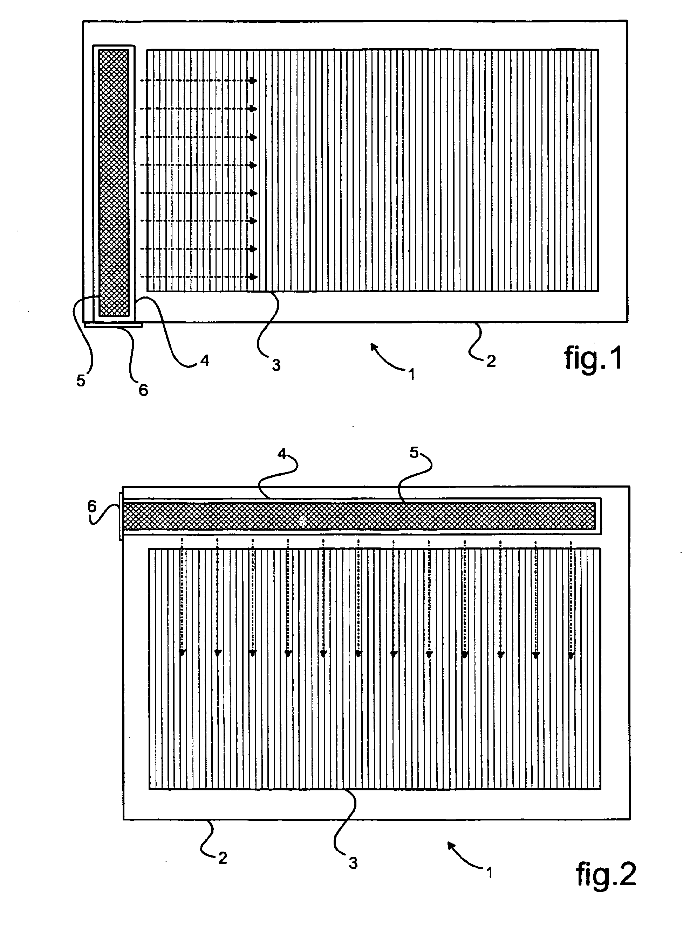

Sur les fig.1 et fig.2, un filtre (1) d'une installation de ventilation, de chauffage et/ou de climatisation, d'un véhicule notamment, est principalement constitué d'une ossature (2) conformée en cadre supportant un média filtrant (3). Un logement (4) est ménagé à l'intérieur de l'un des bords de l'ossature (2), pour la réception d'un substrat (5), tel qu'une mèche ou analogue, imprégné d'un agent traitant volatil.

Le substrat est par exemple formé d'un corps cohésif spongieux. Ce corps est par exemple constitué d'une masse susceptible d'être formée à partir de matière textile, telles que fibres textiles mêlées naturelles ou artificielles, à partir d'une masse de cellulose, tel qu'un tampon de buvard épais du type formé d'une touche ou d'une mouillette, à partir d'un corps formé d'un substrat minéral ou végétal, éventuellement parcellisé et compressé, à partir d'une masse cohésive de poudre de polymère, voire à partir d'un matériau d'origine animale tel qu'un cuir poreux.

Plus particulièrement dans le cas où le corps cohésif spongieux est en matière textile, cette matière est susceptible d'être de la laine, du coton, des microfibres synthétiques tel que polypropylène, ou en tout autre matière textile naturelle ou artificielle.

Plus particulièrement encore, dans le cas où le corps cohésif spongieux est un matériau végétal, ce matériau est susceptible d'être une ouate de cellulose, du bois blanc tel que de sapin ou de pin, du marron, de la sciure compressée, de la tourbe de sphaigne ou autre matériau végétal analogue.

Plus particulièrement encore, dans le cas où le corps cohésif spongieux est un matériau minéral, ce matériau est susceptible d'être de la montmorillonite, de l'attapulgite, un mélange terreux tel que cellulose mêlé à du kaolin, de la terre de diatomée calciné, de la magnésie, de la chaux, des oxydes métallique tel que de fer ou d'aluminium, des silicates, de la vermiculite, du charbon actif, de la silice, du kieselguhr ou autre minéral analogue.

Le substrat est aussi susceptible d'être formé d'un sachet perméable contenant l'agent traitant à l'état liquide ou à l'état de gel.

L'agent traitant est un agent antimicrobien et/ou fongicide et/ou odorant et/ou désinfectant, tel que l'allyl-isothiocynate ou agent analogue de traitement.

Le débouché du logement (4) est fermé par un bouchon (6), qui est rapporté sur l'ossature (2) de manière soit réversible soit irréversible tel qu'il sera décrit plus loin.

L'intégration d'un tel logement (4) sur le filtre (1), et notamment sur l'ossature (2) de ce dernier, permet de conférer au filtre (1) une structure standardisée pour une quelconque installation, en offrant néanmoins la faculté de mettre en place ou non le substrat (5) dans les moyens d'intégration que le filtre comporte à cet effet. La mise en place du substrat (5) peut être effectuée à la demande, par exemple selon les souhaits d'un constructeur du véhicule, et/ou lors d'une première monte et/ou ultérieurement lors d'une opération d'entretien de l'installation et/ou du véhicule. Plus particulièrement, le filtre (1) est susceptible d'être utilisé dans une même configuration de l'installation, en étant doté ou non du substrat (5). Ce dernier peut se présenter sous forme d'un conditionnement standard pour tous les filtres (1), avec pour avantage une réduction des coûts de production en raison d'un volume important de production de tels filtres (1) et substrats (5) standardisés. En outre, l'intégration du substrat (5) sur le filtre (1), à l'intérieur d'un logement (4) que ce dernier comporte, permet une telle intégration sans utilisation de pièce rapportées, tel qu'une cartouche logeant le substrat (5). Ce dernier est préférentiellement disposé sur l'ossature (2) hors du passage du flux d'air, ou tout au moins dans une zone de l'ossature (2) normalement pleine, de sorte que l'intégration du substrat (5) n'induit aucune perte aéraulique.

Le moyen d'intégration du substrat (5) sur le filtre (1) est organisé pour une diffusion de l'agent traitant correspondant à une quantité quotidienne de consigne. Par exemple, le logement (4) est dimensionné à l'intérieur du filtre (1) pour obtenir une telle diffusion. Plus particulièrement, la paroi perméable du filtre (1) à travers laquelle est diffusé l'agent traitant est une paroi formée de polypropylène chargée de talc à 20%, présentant une épaisseur de l'ordre de 0,9 mm +/- 10% et pour une surface globale du logement de l'ordre de 4200 mm² +/- 10%. De telles dispositions permettent d'obtenir une diffusion quotidienne de l'agent traitant de l'ordre de 45 mg à 40°C. Le logement est aussi susceptible d'être dimensionné pour ménager une épaisseur de matière à travers la paroi de l'ossature et/ou du conteneur solidarisé à cette dernière, pour une diffusion quotidienne comprise entre 5 mg et 50 mg à 30°C. De préférence, cette diffusion est de l'ordre de 18 mg par jour+/-10%.

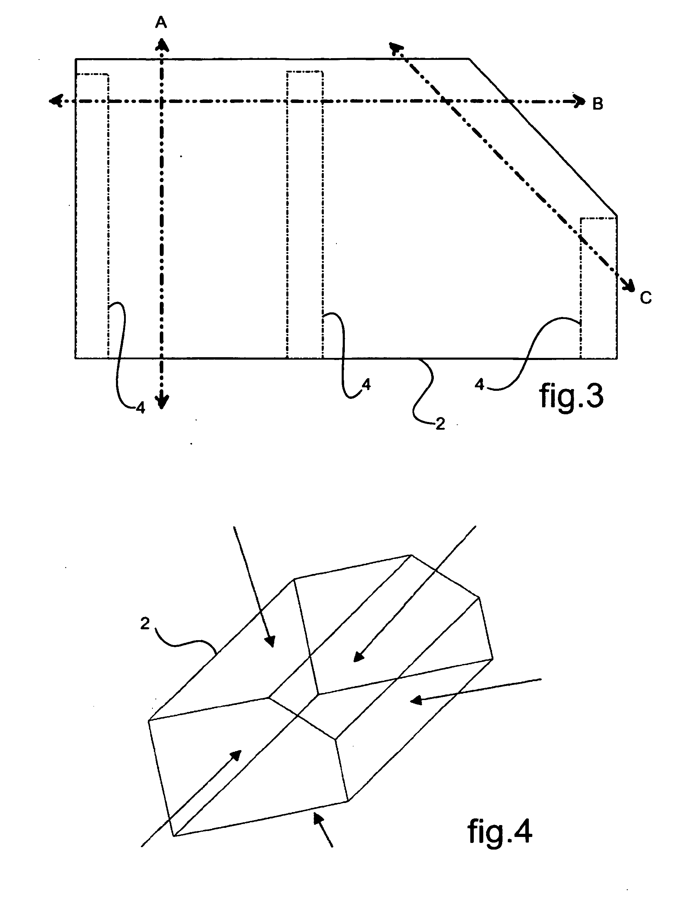

Sur la fig.1, le logement (4) est ménagé à l'intérieur d'un bord latéral de l'ossature (2), tandis que sur la fig.2, le logement (4) est ménagé à l'intérieur d'un bord longitudinal de l'ossature (2). En se reportant à la fig.3, le logement (4) est susceptible d'être ménagé sur l'ossature (2) suivant une orientation correspondante à l'une quelconque au moins des dimensions de cette ossature (2). Plus particulièrement, le logement (4) est susceptible d'être ménagé suivant une orientation A parallèle à un bord latéral de l'ossature (2), et/ou suivant une orientation B parallèle à un bord longitudinal de l'ossature (2), et/ou suivant une orientation C inclinée par rapport au plan général de l'ossature (2). Selon différentes positions du logement (4) respectivement représentées sur la fig.3 en traits interrompus, celui-ci peut être ménagé en bordure de l'ossature (2) pour éviter des pertes de charge du flux d'air traversant le média filtrant (3), ou encore être ménagé dans une zone médiane du filtre (1) pour favoriser une diffusion plus homogène de l'agent traitant sur l'évaporateur de l'installation. Il est néanmoins préféré de placer le logement (4) en bordure de l'ossature (2), dans une zone d'obstacle normalement présente et occupée par la bordure du filtre (1), pour éviter d'accroître les pertes aérauliques.

Sur la fig.4, le débouché du logement (4) est susceptible d'être ménagé sur une quelconque face du filtre (1), en étant orienté suivant une quelconque dimension de l'ossature pour l'introduction du substrat (5) suivant l'une de ces dimensions.

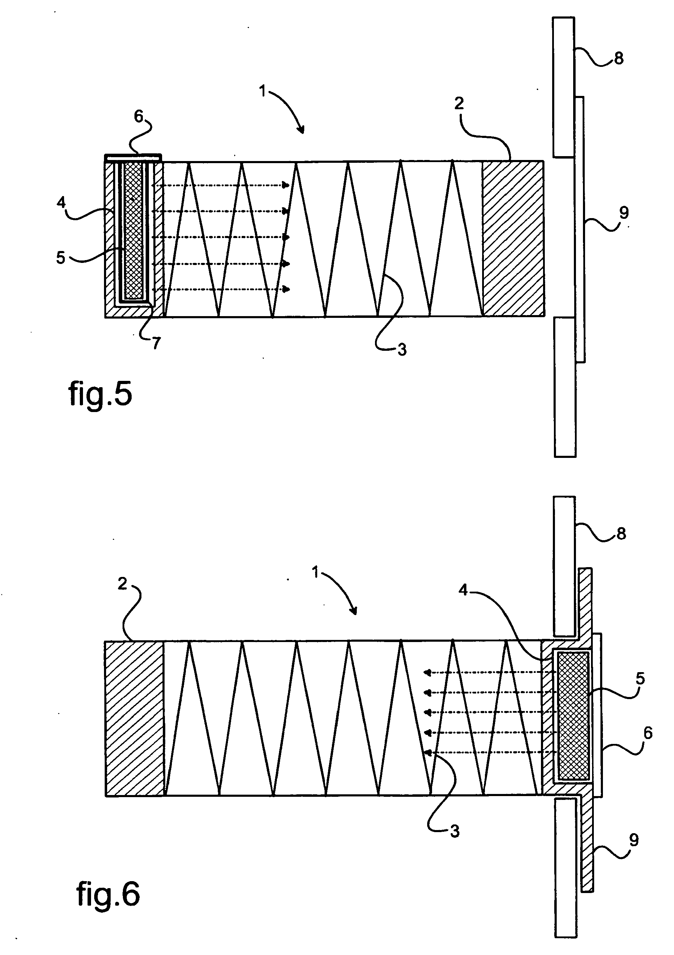

Sur la fig.5, le logement (4) est ménagé dans l'ossature (2) parallèlement aux plis du média filtrant (3). Le substrat (5) est placé à l'intérieur d'une cartouche intermédiaire (7) munie du bouchon (6) de fermeture du débouché du logement (4). Le filtre (1) est introduit à l'intérieur de l'installation à travers un passage ménagé dans une paroi (8) de cette dernière, qui est fermé par une trappe (9) d'accès au filtre (1), indépendante de ce dernier. Cette cartouche intermédiaire (7) est notamment perméable pour autoriser la diffusion de l'agent volatil selon les quantités quotidiennes de consigne.

Sur la fig.6, l'ossature (2) intègre la trappe (9) de fermeture du passage ménagé dans la paroi (8) de l'installation pour le passage et la mise en place du filtre (1). Le logement (4) de réception du substrat (5) est ménagé à l'intérieur de la trappe (9), et est obturé par un bouchon (6) indépendant rapporté de manière réversible ou irréversible sur la trappe (9). L'ossature (2) et la trappe (9) forment de préférence une pièce unitaire, le remplacement du filtre (1) s'effectuant par un remplacement global de ladite pièce unitaire.

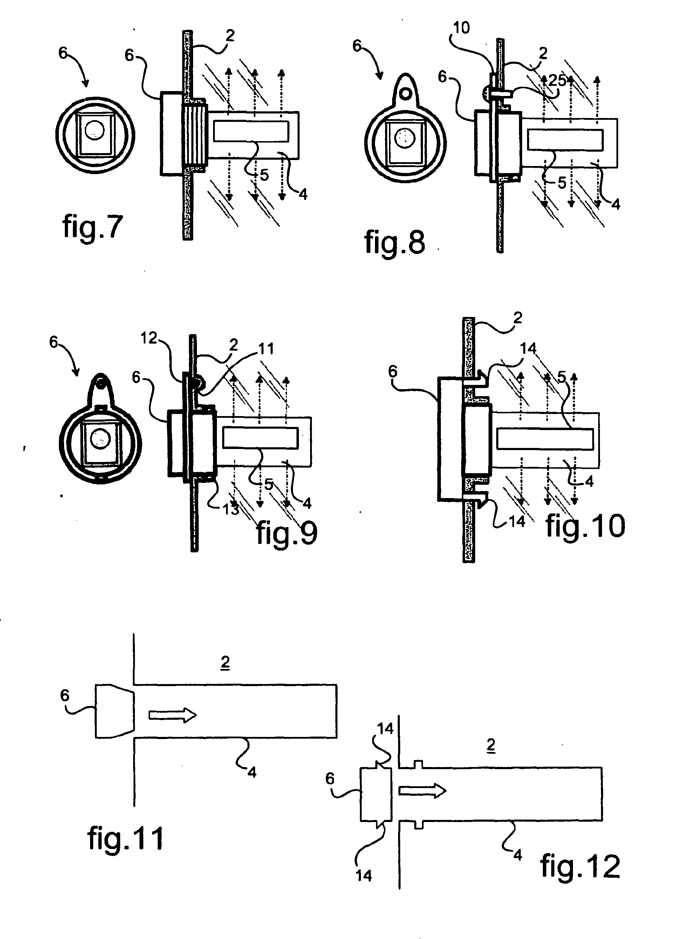

Sur les fig.7 à fig.12, le bouchon (6) est utilisé pour obturer le débouché du logement (4), qui reçoit de préférence directement le substrat (5). Le logement (4) est ménagé dans l'ossature (2), sur laquelle est rapporté le bouchon (6) soit de manière réversible, tel que représenté sur les fig.7 à fig.9, soit de manière irréversible tel que représenté sur les fig.10 à fig.12. Sur la fig.7, le bouchon (6) est rapporté sur l'ossature (2) par vissage. Sur la fig.8, le bouchon (6) est rapporté sur l'ossature (2) au moyen d'une vis (25) traversant une languette (10) que comporte le bouchon (6). Sur la fig.9, le bouchon (6) est rapporté sur l'ossature (2) par l'intermédiaire d'un picot d'emboîtement (11) ménagé sur une languette (12) que comporte le bouchon (6). Un dispositif à ergots (13) de liaison par quart de tour complète avantageusement la fixation du bouchon (6) sur l'ossature (2). Sur les fig.10 à fig.12, le bouchon (6) est rapporté sur l'ossature (2) par emboîtement irréversible. Sur les fig.10 et fig.12, le bouchon (6) est rapporté sur l'ossature (2) au moyen de clips (14). Sur la fig.11 le bouchon (6) est rapporté sur l'ossature (2) par emboîtement en force. Selon une autre variante de réalisation non illustrée, le bouchon (6) est rapporté sur l'ossature (2) de manière irréversible par collage. Ces exemples de réalisation des modalités de liaison entre le bouchon (6) et l'ossature (2) sont données à titre indicatif, et peuvent être remplacées par tout autre moyen de liaison réversible ou irréversible.

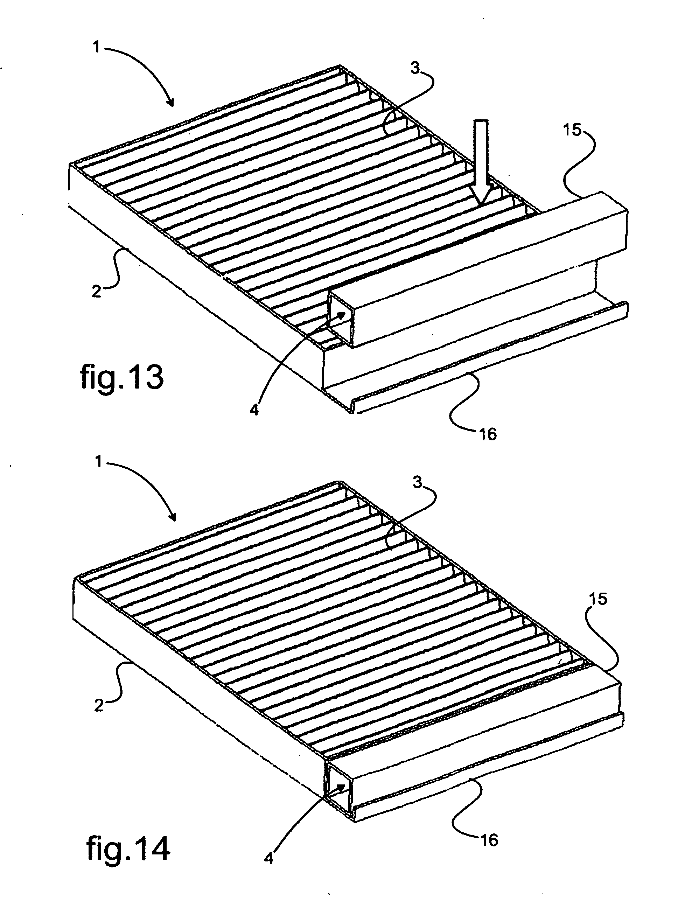

Sur les fig.13 et fig.14 le logement (4) de réception du substrat (5) est matérialisé par un conteneur (15) rapporté sur l'ossature (2), en bordure de l'un des côtés de cette dernière, un côté latéral sur les exemples de réalisation illustrés. Cet apport est notamment réalisé de manière irréversible par soudage, par collage, par rivetage ou autre moyens analogues. Sur cette variante de réalisation, l'ossature (2) comporte une goulotte (16) de réception du conteneur (15). Selon des variantes de réalisation non illustrées, le conteneur (15) est rapporté sur l'ossature par surmoulage, voire encore en étant formé par moulage avec celle-ci de manière à constituer une pièce unitaire. Selon une autre forme de réalisation, ladite goulotte (16) est matérialisée par le dernier pli du média filtrant, qui est plié de manière à conformer la goulotte (16). Le conteneur (15) est de préférence d'une dimension correspondante à celle du côté de l'ossature (2) sur lequel il est ménagé, pour limiter la zone de non filtration de l'air circulant à travers l'installation.

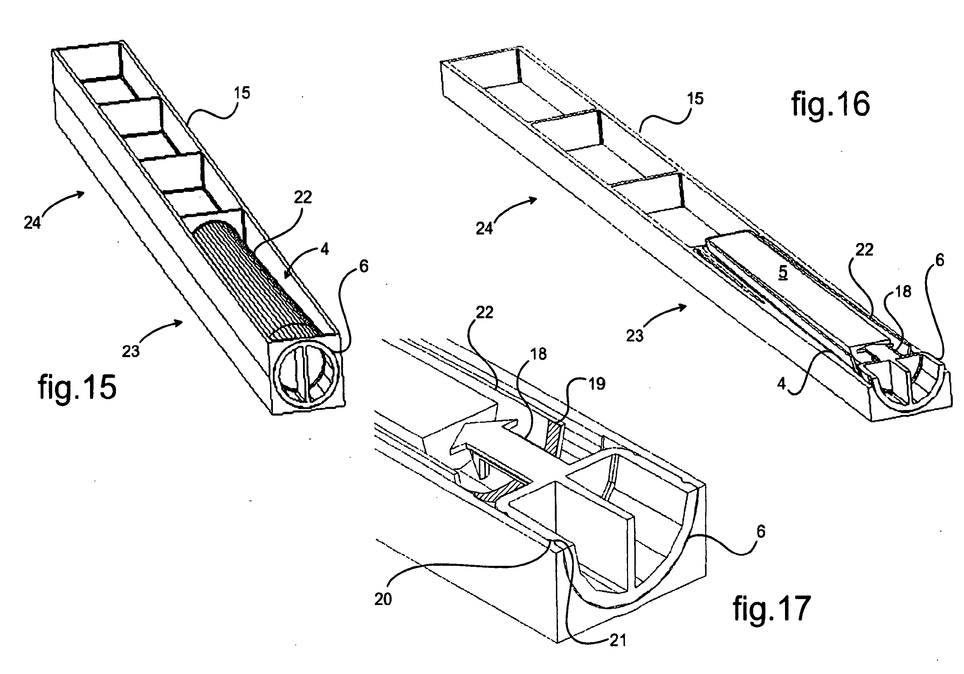

Sur les fig.15 à fig.17, le logement (4) de réception du substrat (5) est ménagé à l'intérieur d'un conteneur (15) destiné à être solidarisé au filtre (1). Ce conteneur (15) comporte le logement (4) de réception du substrat (5). Le bouchon (6) de fermeture du débouché du logement (4) est muni d'un percuteur (18) destiné à perforer un opercule (19) d'obturation du débouché du logement (4). Le bouchon (6) est monté mobile sur le conteneur (15), entre une position d'attente dans laquelle le percuteur (18) est maintenu éloigné de l'opercule (19), et une position d'activation dans laquelle l'opercule (19) est perforé. Ces dispositions permettent d'activer le dispositif à la demande, en manoeuvrant le bouchon (6) depuis la position d'attente vers la position d'activation. Selon l'exemple illustré de montage du bouchon (6) sur le conteneur (15), ceux-ci comportent des organes d'emboîtement coopérant (20,21), tels que gorges et lèvres. Le passage du bouchon (6) de l'une à l'autre des positions s'effectue par poussée, pour provoquer son déplacement axial et le passage d'une lèvre au moins depuis une première saignée vers une autre saignée axialement décalée. D'autres variantes de montage du bouchon (6) sur le conteneur (15) entre ses deux positions d'attente et d'activation sont susceptibles d'être mises en oeuvre.

L'opercule (19) est susceptible d'être ménagé en bout d'une cartouche intermédiaire (22) logeant le substrat (5) et introduite dans le logement (4), tel que sur l'exemple de réalisation illustré. Selon d'autres formes de réalisation non représentées, l'opercule (19) est ménagé directement sur le conteneur (15), en étant rapportée ou formé conjointement avec celui-ci, ou encore est ménagé en bout du substrat (5).

On notera que selon diverses formes de réalisation visant à l'application de la règle consistant à ménager sur le bouchon (6) un percuteur (18) de perforation d'un opercule (19), le bouchon (6) est susceptible d'être rapporté directement sur l'ossature (2) du filtre (1) qui comporte un logement (4) de réception du substrat (5), tel que sur les variantes précédemment illustrées. Selon une autre variante, le conteneur (15) est susceptible d'être formé d'une cartouche ou analogue solidarisée au média (3) du filtre (1).

Sur l'exemple de réalisation illustré, le substrat (5) est logé à l'intérieur d'une première zone axiale (23) du conteneur (15). Cette première zone (23) est prolongée par une deuxième zone axiale (24), qui forme un corps d'extension du conteneur (15) le long de la totalité de la paroi correspondante de l'ossature (2), pour éviter la formation d'une zone d'absence de filtration du flux d'air. La deuxième zone axiale (24) est préférentiellement perméable pour autoriser la diffusion de l'agent traitant à son travers, et permettre une diffusion homogène de l'agent traitant à l'intérieur de la totalité du conteneur (15). La perméabilité de la deuxième zone axiale (24) permet notamment par une propagation de l'agent traitant depuis l'extrémité du conteneur (15) comportant le bouchon (6), jusqu'à son extrémité opposée.

## Revendications

1. Dispositif de traitement antimicrobien par diffusion d'un agent traitant volatil pour une installation de ventilation, chauffage et/ou de climatisation, comprenant un filtre (1) à air d'habitacle constitué d'une ossature (2) porteuse d'un média filtrant (3), le filtre (1) comportant au moins un moyen d'intégration d'un substrat (5) porteur de l'agent traitant, ledit moyen d'intégration étant constitué d'un logement (4) de réception du substrat (5) ménagé dans l'ossature (2) du filtre (1), **caractérisé en ce que** ledit logement (4) est obturé par un bouchon (6) muni de moyens de liaison avec le filtre (1).

2. Dispositif selon la revendication 1, **caractérisé en ce que** le logement (4) est ménagé sur l'ossature (2) en s'étendant sensiblement suivant l'une quelconque au moins des dimensions de ce dernier.

3. Dispositif selon l'une quelconque des revendications 1 et 2, **caractérisé en ce que** l'ossature (2) étant conformée en cadre, le logement (4) est ménagé à l'intérieur de l'un des bords du cadre.

4. Dispositif selon l'une quelconque des revendications 1 et 2, **caractérisé en ce que** l'ossature (2) étant conformée en cadre, le logement (4) est ménagé entre deux bords opposés du cadre.

5. Dispositif selon l'une quelconque des revendications 1 et 2, **caractérisé en ce que** l'ossature (2) étant munie d'une trappe (9) de fermeture d'un passage d'introduction du filtre (1) à l'intérieur de l'installation, le logement (4) est ménagé dans ladite trappe (9).

6. Dispositif selon la revendication 1, **caractérisé en ce que** ledit moyen d'intégration est constitué par un conteneur (15) qui est solidarisé à l'ossature (2) de manière à former avec le filtre une pièce unitaire, et qui comporte un logement (4) de réception du substrat.

7. Dispositif selon la revendication 6, **caractérisé en ce que** l'ossature (2) étant conformée en cadre, le conteneur (15) est rapporté latéralement à un bord du cadre.

8. Dispositif selon la revendication 7, **caractérisé en ce que** le bord du cadre est muni d'une goulotte (16) de réception du conteneur (15).

9. Dispositif selon l'une quelconque des revendications 6 à 8, **caractérisé en ce que** le conteneur (15) est conjointement ménagé par moulage avec l'ossature (2).

10. Dispositif selon l'une quelconque des revendications 6 à 9, **caractérisé en ce que** le conteneur (15) comporte au moins deux zones en prolongement axial, l'une (23) dans laquelle est ménagé le logement (4) et l'autre (24) formant un corps d'extension du conteneur (15) le long de la totalité de la paroi correspondante de l'ossature (2) pour éviter la formation d'une zone de non filtration du flux d'air.

11. Dispositif selon la revendication 1, **caractérisé en ce que** les moyens de liaison du bouchon (6) avec le filtre (1) sont des moyens de liaison réversible.

12. Dispositif selon la revendication 1, **caractérisé en ce que** les moyens de liaison du bouchon (6) avec le filtre (1) sont des moyens de liaison irréversible.

13. Dispositif selon l'une quelconque des revendications 1, 11, 12, **caractérisé en ce que** le bouchon (6) est solidaire d'une cartouche intermédiaire (7) logeant le substrat (5).

14. Dispositif selon l'une quelconque des revendications 1, 11 à 13, **caractérisé en ce que** le bouchon (6) est muni d'un percuteur (18) de perforation d'un opercule (19) d'obturation du logement (4).

15. Dispositif selon la revendication 14, **caractérisé en ce que** le substrat (5) étant logé à l'intérieur d'un conteneur (15), celui-ci est muni dudit opercule (19).

16. Dispositif selon la revendication 14, en ce que ledit opercule (19) est ménagé en bout du substrat (5).

17. Dispositif selon la revendication 14, **caractérisé en ce que** ledit opercule (19) est ménagé à l'intérieur du logement (4) que comporte le filtre (1) pour la réception du substrat (5).

18. Dispositif selon l'une quelconque des revendications 1 11 à 17, **caractérisé en ce que** les moyens de liaison du bouchon (6) avec l'ossature (2) sont des moyens de liaison à deux positions entre lesquelles le bouchon (6) est monté mobile sur l'ossature (2), l'une d'attente dans laquelle le percuteur (18) est éloigné de l'opercule (19), l'autre d'activation dans laquelle le percuteur (18) perfore l'opercule (19) pour libérer l'émission de l'agent volatil traitant.

19. Installation de ventilation, chauffage et/ou de climatisation comprenant un dispositif de traitement antimicrobien selon l'une quelconque des revendications précédentes.

20. Installation selon la revendication 19, **caractérisé en ce que** le filtre (1) est indifféremment placé en amont et/ou en aval d'un évaporateur que comporte l'installation.

21. Installation selon l'une quelconque des revendications 19 et 20, **caractérisée en ce que** le filtre est logé à l'intérieur d'un boîtier logeant en outre des organes fonctionnels de l'installation.

22. Installation selon l'une quelconque des revendications 19 et 20, **caractérisée en ce que** le filtre est logé à l'intérieur d'un boîtier qui lui est affecté, et est placé sous l'auvent du véhicule pour être accessible depuis le compartiment moteur.

## Claims

1. Apparatus for antimicrobial treatment by diffusion of a volatile treating agent for a ventilation, heating and/or air-conditioning system, comprising a passenger compartment air filter (1) consisting of a framework (2) that holds a filtering medium (3), the filter (1) comprising at least one means for incorporating a substrate (5) that holds the treating agent, said incorporating means consisting of a housing (4) for the substrate (5) formed in the framework (2) of the filter (1), **characterized in that** said housing (4) is closed off by a stopper (6) provided with means for connecting it to the filter (1).

2. Apparatus according to Claim 1, **characterized in that** the housing (4) is formed in the framework (2) and extends approximately in any one or more of the dimensions of the latter.

3. Apparatus according to either of Claims 1 and 2, **characterized in that** the framework (2) has the shape of a frame and the housing (4) is formed within one of the edges of the frame.

4. Apparatus according to either of Claims 1 and 2, **characterized in that** the framework (2) has the shape of a frame and the housing (4) is formed between two opposing edges of the frame.

5. Apparatus according to either of Claims 1 and 2, **characterized in that** the framework (2) is provided with a flap (9) for closing a passage for inserting the filter (1) into the system and the housing (4) is formed in said flap (9).

6. Apparatus according to Claim 1, **characterized in that** said incorporating means consists of a container (15) which is secured to the framework (2) so as to form a single piece with the filter and which comprises a housing (4) for the substrate.

7. Apparatus according to Claim 6, **characterized in that** the framework (2) has the shape of a frame and the container (15) is attached laterally to one edge of the frame.

8. Apparatus according to Claim 7, **characterized in that** the edge of the frame is provided with a trough (16) for the container (15).

9. Apparatus according to any one of Claims 6 to 8, **characterized in that** the container (15) is moulded together with the framework (2).

10. Apparatus according to any one of Claims 6 to 9, **characterized in that** the container (15) comprises at least two axially extending regions, one (23) in which the housing (4) is made and the other (24) forming a body that extends the container (15) along the entire length of the corresponding wall of the framework (2) in order to prevent the formation of a region where the airflow is not filtered.

11. Apparatus according to Claim 1, **characterized in that** the means for connecting the stopper (6) to the filter (1) are reversible connection means.

12. Apparatus according to Claim 1, **characterized in that** the means for connecting the stopper (6) to the filter (1) are irreversible connection means.

13. Apparatus according to any one of Claims 1, 11 and 12, **characterized in that** the stopper (6) is secured to an intermediate cartridge (7) that houses the substrate (5).

14. Apparatus according to any one of Claims 1 and 11 to 13, **characterized in that** the stopper (6) is provided with a spike (18) for perforating a seal (19) closing off the housing (4).

15. Apparatus according to Claim 14, **characterized in that** the substrate (5) is housed inside a container (15) and the latter is provided with said seal (19).

16. Apparatus according to Claim 14, **characterized in that** said seal (19) is provided at the end of the substrate (5).

17. Apparatus according to Claim 14, **characterized in that** said seal (19) is provided inside the housing (4) in the filter (1) for holding the substrate (5).

18. Apparatus according to any one of Claims 1 and 11 to 17, **characterized in that** the means for connecting the stopper (6) to the framework (2) are means for connecting to two positions between which the stopper (6) is mounted such that it can move on the framework (2), one position being a waiting position in which the spike (18) is at a distance from the seal (19) and the other position being an activation position in which the spike (18) perforates the seal (19) in order to release the volatile treating agent.

19. Ventilation, heating and/or air-conditioning system comprising an antimicrobial treatment apparatus according to any one of the preceding claims.

20. System according to Claim 19, **characterized in that** the filter (1) can be fitted upstream and/or downstream of an evaporator in the system.

21. System according to either of Claims 19 and 20, **characterized in that** the filter is housed inside a casing that also houses the functional members of the system.

22. System according to either of Claims 19 and 20, **characterized in that** the filter is housed inside a casing provided therefor and is fitted under the cowl of the vehicle in order to be accessible from the engine compartment.

## Patentansprüche

1. Vorrichtung zur antimikrobiellen Behandlung durch Diffusion eines flüchtigen Behandlungsmittels für eine Belüftungs-, Heiz- und/oder Klimaanlage, mit einem Fahrgastraum-Luftfilter (1), der aus einem ein Filtermedium (3) tragenden Gerüst (2) besteht, wobei der Filter (1) mindestens ein Mittel zum Einbau eines das Behandlungsmittel tragenden Substrats (5) aufweist, wobei das Einbaumittel aus einem Fach (4) zur Aufnahme des Substrats (5) besteht, das im Gerüst (2) des Filters (1) angeordnet ist, **dadurch gekennzeichnet, dass** das Fach (4) von einem Deckel (6) verschlossen wird, der mit Verbindungsmitteln mit dem Filter (1) versehen ist.

2. Vorrichtung nach Anspruch 1, **dadurch gekennzeichnet, dass** das Fach (4) auf dem Gerüst. (2) im Wesentlichen gemäß mindestens einer von dessen Abmessungen verlaufend angeordnet ist.

3. Vorrichtung nach einem der Ansprüche 1 und 2, **dadurch gekennzeichnet, dass**, wenn das Gerüst (2) als Rahmen ausgebildet ist, das Fach (4) im Inneren eines der Ränder des Rahmens angeordnet ist.

4. Vorrichtung nach einem der Ansprüche 1 und 2, **dadurch gekennzeichnet, dass**, wenn das Gerüst (2) als Rahmen ausgebildet ist, das Fach (4) zwischen zwei gegenüberliegenden Rändern des Rahmens angeordnet ist.

5. Vorrichtung nach einem der Ansprüche 1 und 2, **dadurch gekennzeichnet, dass**, wenn das Gerüst (2) mit einer Verschlussklappe (9) eines Einführdurchgangs des Filters (1) ins Innere der Anlage versehen ist, das Fach (4) in der Klappe (9) angeordnet ist.

6. Vorrichtung nach Anspruch 1, **dadurch gekennzeichnet, dass** das Einbaumittel aus einem Behälter (15) besteht, der fest mit dem Gerüst (2) verbunden wird, um mit dem Filter ein einheitliches Bauteil zu bilden, und der ein Fach (4) zur Aufnahme des Substrats aufweist.

7. Vorrichtung nach Anspruch 6, **dadurch gekennzeichnet, dass**, wenn das Gerüst (2) als Rahmen ausgebildet ist, der Behälter (15) seitlich an einen Rand des Rahmens angesetzt ist.

8. Vorrichtung nach Anspruch 7, **dadurch gekennzeichnet, dass** der Rand des Rahmens mit einer Aufnahmerinne (16) für den Behälter (15) versehen ist.

9. Vorrichtung nach einem der Ansprüche 6 bis 8, **dadurch gekennzeichnet, dass** der Behälter (15) in Verbindung mit dem Gerüst (2) durch Formen angeordnet wird.

10. Vorrichtung nach einem der Ansprüche 6 bis 9, **dadurch gekennzeichnet, dass** der Behälter (15) mindestens zwei Zonen in axialer Verlängerung aufweist, von denen in einer (23) das Fach (4) angeordnet ist und die andere (24) einen Verlängerungskörper des Behälters (15) entlang der ganzen entsprechenden Wand des Gerüsts (2) bildet, um die Bildung einer Zone der Nicht-Filterung des Luftstroms zu verhindern.

11. Vorrichtung nach Anspruch 1, **dadurch gekennzeichnet, dass** die Verbindungsmittel des Deckels (6) mit dem Filter (1) Mittel zur umkehrbaren Verbindung sind.

12. Vorrichtung nach Anspruch 1, **dadurch gekennzeichnet, dass** die Verbindungsmittel des Deckels (6) mit dem Filter (1) Mittel zur unumkehrbaren Verbindung sind.

13. Vorrichtung nach einem der Ansprüche 1, 11, 12, **dadurch gekennzeichnet, dass** der Deckel (6) fest mit einer Zwischenpatrone (7) verbunden ist, in der das Substrat (5) untergebracht ist.

14. Vorrichtung nach einem der Ansprüche 1, 11 bis 13, **dadurch gekennzeichnet, dass** der Deckel (6) mit einem Einstechteil (18) zum Durchstoßen einer Abdeckung (19) zum Abdichten des Fachs (4) versehen ist.

15. Vorrichtung nach Anspruch 14, **dadurch gekennzeichnet, dass**, wenn das Substrat (5) im Inneren eines Behälters (15) untergebracht ist, dieser mit der Abdeckung (19) versehen ist.

16. Vorrichtung nach Anspruch 14, **dadurch gekennzeichnet, dass** die Abdeckung (19) am Ende des Substrats (5) angeordnet ist.

17. Vorrichtung nach Anspruch 14, **dadurch gekennzeichnet, dass** die Abdeckung (19) im Inneren des Fachs (4) angeordnet ist, das der Filter (1) zur Aufnahme des Substrats (5) aufweist.

18. Vorrichtung nach einem der Ansprüche 1, 11 bis 17, **dadurch gekennzeichnet, dass** die Verbindungsmittel des Deckels (6) mit dem Gerüst (2) Verbindungsmittel mit zwei Stellungen sind, zwischen denen der Deckel (6) auf dem Gerüst (2) beweglich montiert ist, die eine eine Wartestellung, in der das Einstechteil (18) von der Abdeckung (19) entfernt ist, die andere eine Aktivierungsstellung, in der das Einstechteil (18) die Abdeckung (19) durchbohrt, um die Ausgabe des flüchtigen Behandlungsmittels freizugeben.

19. Belüftungs-, Heiz- und/oder Klimaanlage, die eine Vorrichtung zur antimikrobiellen Behandlung nach einem der vorhergehenden Ansprüche enthält.

20. Anlage nach Anspruch 19, **dadurch gekennzeichnet, dass** der Filter (1) beliebig vor und/oder hinter einem Verdampfer angeordnet ist, den die Anlage aufweist.

21. Anlage nach einem der Ansprüche 19 und 20, **dadurch gekennzeichnet, dass** der Filter im Inneren eines Gehäuses untergebracht ist, in dem außerdem Funktionsorgane der Anlage untergebracht sind.

22. Anlage nach einem der Ansprüche 19 und 20, **dadurch gekennzeichnet, dass** der Filter im Inneren eines ihm zugewiesenen Gehäuses untergebracht ist und sich unter dem Luftschlitz des Fahrzeugs befindet, um vom Motorraum aus zugänglich zu sein.
